Europäisches Patentamt

European Patent Office

Office européen des brevets

(11) Veröffentlichungsnummer: **0 360 993**
**A2**

(12) **EUROPÄISCHE PATENTANMELDUNG**

(21) Anmeldenummer: **89112810.0**

(51) Int. Cl.5: **D21C 5/02**

(22) Anmeldetag: **13.07.89**

(30) Priorität: **17.09.88 DE 3831668**

(43) Veröffentlichungstag der Anmeldung:
**04.04.90 Patentblatt 90/14**

(84) Benannte Vertragsstaaten:
**AT DE FR GB IT NL SE**

(71) Anmelder: **SULZER-ESCHER WYSS GMBH**
**Escher Wyss-Strasse 25 Postfach 1380**
**D-7980 Ravensburg(DE)**

(72) Erfinder: **Maier, Josef**
**Pfänderweg 12**
**D-7980 Ravensburg(DE)**
Erfinder: **Matzke, Wolfgang, Dr.**
**Max Reger-Strasse 28**
**D-7981 Berg(DE)**
Erfinder: **Selder, Harald**
**Goetheweg 16**
**D-7981 Schlier(DE)**

(54) **Verfahren zur Weissgraderhöhung von Altpapier mit neutralem Wasserkreislauf.**

(57) Es wird ein Deinking- und Bleichverfahren für Altpapier beschrieben, bei welchem man im Stoffauflöser ohne oder mit numinimalen Mengen an Chemikalien, insbesondere Alkali, arbeitet. Nach einer ersten Druckfarbenentfernung, beispielsweise mit einer Wäsche, erfolgt eine 2-stufige Bleiche, vorzugsweise mit der Kombination Peroxid/Formamidinsulfinsäure (FAS). Nach der 1. Bleichstufe mit Peroxid liegt der pH-Wert im alkalischen Bereich von pH ca. 8,5 - 9,5. Bei annähernd stöchiometrischen Verhältnissen von Alkali und FAS liegt nach der 2. Bleichstufe ein Milieu im Neutralbereich von pH 6,5 - 7,5 vor, ohne daß eine zusätzliche Absäuerung erforderlich ist. Dadurch wird die Reinigung der Kreislaufwässer, z.B. mittels Entspannungsflotation, wesentlich erleichtert. Die 2-stufige Bleiche erfolgt beispielsweise in der Kombination von Dispergerbleiche und Bleiche bei mittlerer Stoffdichte. Nach der Disperger-Behandlung, bzw. nach der Bleiche erfolgt eine nochmalige Druckfarben- und Schmutzentfernung, z.B. durch Flotation oder Wäsche, wobei sich auch nichtionische Schäumer/Sammler bewährt haben. Rest-Peroxid aus der 1. Bleichstufe, welches das in der 2. Bleichstufe eingesetzte FAS zerstören würde, kann durch Zusatz von Thioharnstoff nicht nur unschädlich gemacht, sondern vorteilhaft in zusätzliches FAS umgewandelt werden.

FIG.1

## Verfahren zur Weißgraderhöhung von Altpapier mit neutralem Wasserkreislauf

Diese Erfindung betrifft ein Verfahren nach dem Oberbegriff des Anspruchs 1. Verfahren dieser Art verbinden die Bleiche des gewonnenen Faserstoffes mit dem sogenannten Deinken. Letzteres ist die Entfernung von störenden kleinen Partikeln, insbesondere Druck- oder Streichfarbenpartikeln sowie sehr kleiner, noch sichtbarer Schmutzteilchen. Beim Deinken bedient man sich der Verfahrensprinzipien Flotation und Wäsche, sowohl in einstufiger als auch mehrstufiger Ausführung. Hierbei gibt es eine Vielzahl von Variationsmöglichkeiten, z.B. Wäsche oder Flotation, Wäsche plus Flotation, Flotation plus Wäsche, Wäsche plus Wäsche oder Flotation plus Flotation.

Die Voraussetzung jedes Deinking-Verfahrens besteht darin, die Druck- sowie gegebenenfalls auch Streichfarben-Partikel von der Faser abzulösen. Das geschieht vorwiegend beim ersten Verfahrensschritt während der mehr oder weniger vollständigen Auflösung des Altpapiers in Einzelfasern, wobei je nach Verfahren unterschiedliche Stoffdichten und Temperaturen in sog. Stofflösern oder Pulpern eingestellt werden. Bisweilen werden auch Auflösetrommeln verwendet. Zur vollständigen Zerlegung restlicher Faserstippen in Einzelfasern werden vielfach noch Entstipper nachgeschaltet. Auch Disperger bewirken eine Zerlegung in die Einzelfasern.

Zur Unterstützung des Ablösevorganges der Druckfaraben einschließlich eines Striches von den Fasern werden häufig Chemikalien bei der Stoffauflösung zugegeben, vor allen Dingen Alkali und Netzmittel, aber auch Bleichmittel wie Peroxid sowie Bleichhilfsmittel, beispielsweise Wasserglas und Komplexbildner. Es ist durchaus üblich, bereits im Stofflöser auch die aus Sammlern und Schäumern bestehenden Flotationshilfsmittel hinzuzugeben, z. B. Seife.

Ein Verfahren, bei dem alkalische Chemikalien in den Stofflöser gegeben werden und sowohl Farbenentfernung als auch Bleiche folgen, beschreibt z.B. ein Sonderdruck der Firma J. M. Voith GmbH, Heidenheim, DE, verfaßt von Dipl.-Ing. L. Pfalzer "Druckfarbenentfernung durch Wäsche oder Flotation. Ein Vergleich aus verfahrenstechnischer und anwendungstechnischer Sicht" (TAPPI Pulping Conference, Seattle 1979).

Die Verwendung von Alkali hat jedoch bekanntlich verschiedene Nachteile, von denen im folgenden einige genannt seien:

a) alkalische Wasserkreisläufe sind durch die meistens zur Klärung angewandte Entspannungsflotation schwieriger zu reinigen als bei neutralem pH,

b) in Abhängigkeit von der Alkalikonzentration werden aus dem Altpapier verstärkt Substanzen herausgelöst, welche den chemischen Sauerstoffbedarf (CSB) im Wasserkreislauf sowie im Abwasser erhöhen,

c) Restalkali im Faserstoff ist in jedem Fall unerwünscht; beispielsweise führt es bei holzhaltigem Altpapier zur Vergilbung, was nur durch Zugabe von Peroxid vermieden werden kann,

d) der deinkte Faserstoff muß am Ende des Deinking-Verfahrens häufig noch abgesäuert werden,

e) die Entwässerbarkeit des Faserstoffes wird gemindert.

Diese Nachteile einer Alkalizugabe im Stofflöser werden häufig in Kauf genommen, um einen hinreichend hellen und sauberen Faserstoff zu gewinnen. Aufgrund der geschilderten Nachteile sind aber bereits einige Altpapier-Aufbereitungssysteme, besonders solche mit Waschdeinking und Kreislaufwasser-Reinigung, so ausgeführt, daß der Alkali- bzw. Chemikalieneinsatz im Stofflöser vollkommen eliminiert wird. Dieses völlige Weglassen von Alkali findet man bisher in Papierfabriken, die fast ausnahmslos holzfreies Altpapier verarbeiten.

Beim Deinking von mengemäßig bedeutenderem holzhaltigem Altpapier mit schwieriger abzulösenden Druckfarben wird nach wie vor mit Alkali gearbeitet.

Beim Arbeiten ganz ohne oder nur mit einem Minimum an Alkali im Stofflöser kann es pasieren, daß die Ablösung der Druckfarben- und Strichpartikel von den Fasern nur unvollständig vonstatten geht. In solchen Anlagen ist daher häufig noch ein Disperger vor oder zwischen den einzelnen Deinking-Schritten installiert, z.B. zwischen Wäsche und Flotation.Dieser Disperger dient nicht nur zur Dispergierung von Stickies und anderen störenden Verunreinigungen, sondern häufig auch wirkungsvoll zur Ablösung von restlichen Druck- und Streichfarben. In der deutschen Offenlegung DE-OS 36 10 940 wird auch auf die Verkürzung der Bleichzeiten durch die Disperger-Bleiche hingewiesen. Um jedoch im Neutralbereich von pH ca. 6,5 - 7,5 zu bleiben, wird bei dieser Arbeitsweise im allgemeinen lediglich eine einstufige reduktive Nachbleiche mit Natriumdithionit durchgeführt, so daß der erzielbare Weißgehaltsgewinn limitiert ist. Eine einstufige oxidative Bleiche mit Peroxid oder eine zweistufige oxidative/reduktive Bleiche mit der Kombination Peroxid/Hydrosulfit ist im Prinzip ebenfalls durchführbar. Da jedoch bei der Peroxid-Bleiche ein alkalischer pH-Wert benötigt wird, müßte jeweils nach einer solchen Bleiche eine aufwendige Absäuerung betrieb werden, um im Neutralbereich zu bleiben.

Die Erfindung hat zum Ziel, ein Verfahren der angegebenen Art zu schaffen, mit dem Nachteile des Standes der Technik vermieden werden können. Es soll erreicht werden, daß - obwohl für die Bleiche ein erheblicher Chemikalieneinsatz nötig ist - derartige Chemikalien an keiner Stelle in schädlicher Weise in den Wasserkreislauf gelangen oder in schädlicher Weise mit dem zu gewinnenden Faserstoff mitgeführt werden. Ebenso ist eine zusätzliche Chemikalienzufuhr zu vermeiden, die zwar die Schädlichkeit der bereits enthaltenen Chemikalien herabsetzen, dafür aber andere störende Stoffe erzeugen könnte. Die genannten Ziele spielen bei modernen Verfahren mit Wasseraufbereitung und -wiederverwendung eine besonders große Rolle. Es versteht sich von selbst, daß das Verfahren gleichzeitig eine hohe Weißgradsteigerung bei ökonomischem Betrieb gewährleisten muß.

Diese Aufgabe wird durch die im Kennzeichen des Anspruches 1 genannten Maßnahmen gelöst.

Das erfindungsgemäße Verfahren wird anhand eines Ausführungsbeispieles mit Hilfe dreier Figuren erklärt. Dabei zeigen schematisch

Fig. 1 ein Ausführungsbeispiel,

Fig. 2 den Reaktionsmechanismus der FAS-Bleiche,

Fig. 3 den Reaktionsmechanismus der FAS-Erzeugung aus Peroxid.

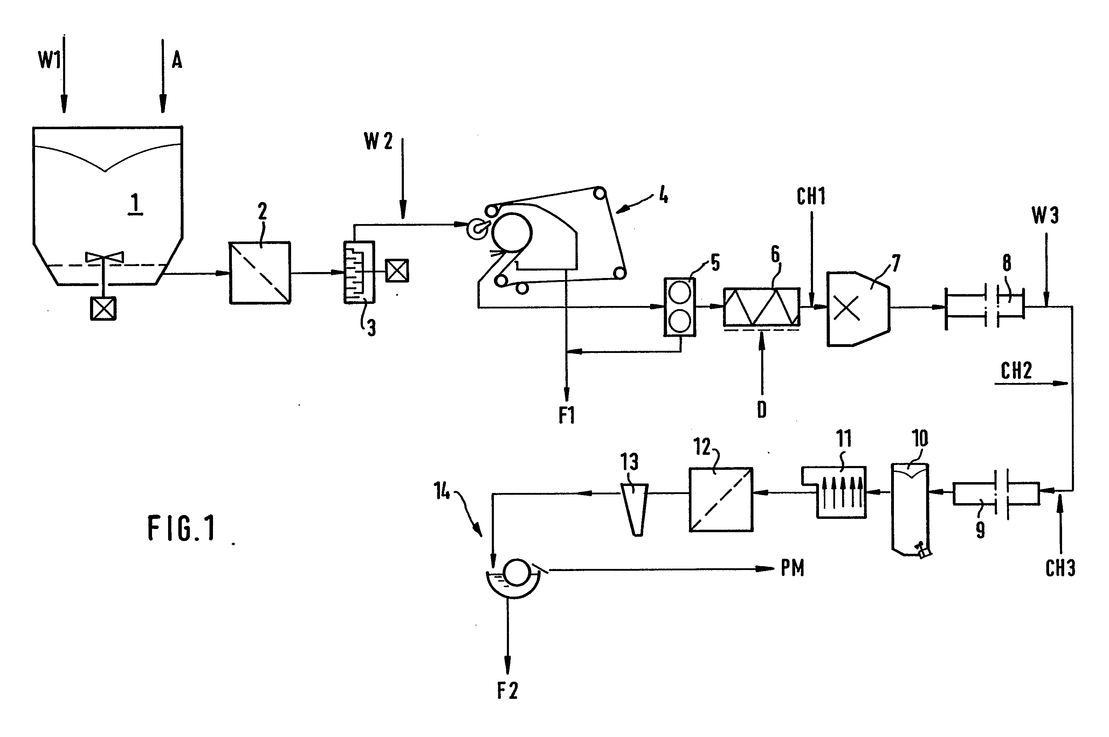

Die erfindungsgemäße Arbeitsweise eines Deinking-Verfahrens mit Wasserkreisläufen im neutralen pH-Bereich wird in einem Beispiel in Fig. 1 dargestellt. Es handelt sich dabei um eine zweistufige Bleiche, welche ausgestattet ist

- in der ersten Stufe mit Peroxid im alkaischen Medium als Hochkonsistenz-Hochtemperatur-Bleiche (Disperger-Bleiche), z.B. bei 25 % Stoffdichte und 90°C,

- in der zweiten Stufe im vorhandenen oder neueingestellten alkalischen Medium, beginnend mit Formamidinsulfinsäure (FAS) als Medium Consistency-Bleiche (MC-Bleiche) bei z.B. 15 % Stoffdichte und 65°C.

Das die Bearbeitungsschritte darstellende Verfahrensschema zeigt einen Stofflöser 1, in dem aus zugeführtem Altpapier A und Wasser W1 eine wässrige Aufschwemmung hergestellt wird, dort und in der anschließenden Grobreinigung 2 von den gröbsten Verunreinigungen befreit wird. Die folgende Entstipperstufe 3 bewirkt eine weitere Zerlegung des Altpapiers in Einzelfasern sowie eine gewisse Ablösung von Schmutz- und Farbpartikeln von den Fasern. Danach wird durch Wasserzugabe W2 verdünnt. Im sich anschließenden Wäscher 4, der beispielsweise eine Maschine des Typs Variosplit sein kann, findet ein erster Deinkingschritt statt. Das bedeutet, daß mit dem dort anfallenden Waschwasser F1 ein Teil der Farbpartikel oder gegebenenfalls auch Schmutzpartikel abgeführt werden kann, soweit eine bestimmte Teilchengröße nicht überschritten wird. Der weitergeführte gewaschene Faserstoff wird beispielsweise auf einer Siebpresse 5 so weit eingedickt, daß die erste Bleichstufe in Form einer Hochkonsistenz-Hochtemperaturbleiche (Disperger-Bleiche) erfolgen kann. Die Erwärmung des Stoffes geschieht in einem Schneckensystem 6 durch direktes Einblasen von Heißdampf D. Unmittelbar vor dem Disperger 7 werden die Bleich-Chemikalien CH1, Peroxid, Alkali, Komplexbildner, z.B. DTPA, und gegebenenfalls Wasserglas als Stabilisator zugegeben. Das chemische Milieu erhöht sich auf ca. pH 8,5 - 10. Der hochkonsistente Stoff wird danach in einen Bleichreaktor 8 gefördert, der eine Verweilzeit von etwa 15 bis 30 Minuten gewährleistet. Nach Abschluß dieser ersten Bleichstufe erfolgt eine Zwischenverdünnung auf mittlere Konsistenz von ca. 15 % durch Zugabe von Verdünnungswasser W2, wobei normalerweise auch die Temperatur absinkt. Vorteilhaft ist es nun, Thioharnstoff als eine weitere Chemikalie CH2 zur Umwandlung von Rest-Peroxid in FAS einzusetzen. Danach wird das zweite Bleichmittel CH3, Formamidinsulfinsäure (FAS) zugegeben. Der Stoff gelangt nun über einen weiteren Bleichreaktor 9, wo wiederum eine Verweilzeit von ca. 15 - 30 Minuten eingestellt wird, in eine Bleichbütte 10, aus der der Faserstoff als gebleichte Qualität in praktisch neutralem Milieu abgepumpt werden kann. Es schließt sich nun die zweite Deinking-Stufe in einer Flotationszelle 11 an, in welcher durch Anlagern an Luftblasen in bekannter Weise Farb- und Schmutzstoffe in abtrennbarem Schaum an der Oberfläche der Suspension gesammelt und abgeführt werden.

Dazu werden die bekannten Flotationshilfsmittel zugegeben. Vorteilhafterweise wird anschließend in einer Dünnstoffsortierung 12 sowie dem anschließenden Cleaner 13 der Stoff weiter gereinigt. Aus verfahrenstechnischen Gründen wird nun die Konsistenz des Stoffes, die etwa bei 1 % liegt, wieder wesentlich angehoben, was in einem Eindicker 14 geschieht. In dem Eindicker fällt eine größere Menge Filtrat F2 an, welches aber infolge der vorteilhaften Ausbildung des erfindungsgemäßen Verfahrens chemisch neutral ist und daher sehr leicht wieder verwendet werden kann. Der eingedickte Stoff wird weitergeleitet zur Papiererzeugungsanlage.

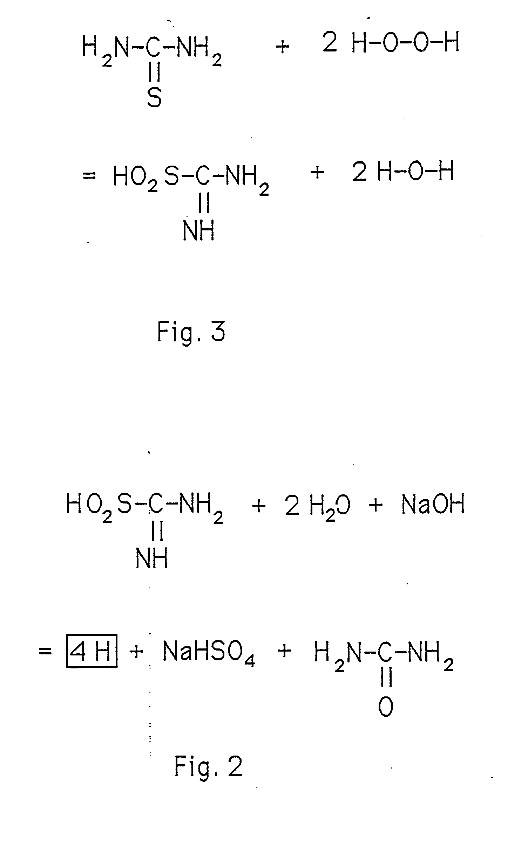

Fig 2 zeigt mit den in der Chemie üblichen Symbolen den Rekationsmechanismus der FAS-Bleiche. Durch Reaktion von Formamidinsulfinsäure (FAS), Wasser und Natriumhydroxid entsteht bleichwirksamer Wasserstoff sowie Natriumhydrogensulfat und Harnstoff. So läßt sich am Ende der Bleiche jeweils bei geeigneten stöchiometrischen Verhältnissen ein pH-Wert im Neutralbereich erzielen, beispielsweise durch Verbrauch des Restalkalis aus der ersten Bleichstufe während der zweiten Bleichstufe. Wegen der höheren Konsistenz in der Disperger-Bleiche der ersten Bleichstufe fällt auch kein alkalisches Eindickfiltrat an, welches den Wasserkreislauf belasten würde.

Zur zweiten Bleichstufe mit FAS ist zu sagen, daß diese prinzipiell wie die erste Bleichstufe ebenfalls als Hochkonsistenz-Hochtemperatur-Bleiche (Disperger-Bleiche) ausgeführt werden könnte, indem man nach dem ersten Disperger auf eine Verdünnung verzichtet und den Stofftransport zum zweiten Disperger mittels eines Schneckensystems o.ä. bewältigt. In diesem Fall liegt die Eingangsstoffdichte in der zweiten Bleichstufe nahezu gleich der Ausgangsstoffdichte nach dem ersten Disperger und auch die Temperatur wird auf annähernd gleicher Höhe gehalten werden können.

Fig. 3 zeigt mit den üblichen Symbolen die Umsetzung von Peroxid in FAS mit Hilfe von Thioharnstoff. Dabei reagiert der Thioharnstoff mit Wasserstoffperoxid zur Formamidinsulfinsäure (FAS) und Wasser.

Den Ansprüchen 6 und 7 liegt nämlich die Idee zugrunde, den an sich negativen Effekt des Rest-Peroxids im alkalischen Medium nach der ersten Bleichstufe, d. h. die Aufzehrung des nachfolgenden reduktiven Bleichmittels, in einen positiven Effekt umzumünzen. Das kann bei Einsatz geeigneter Reaktionspartner durch Erzeugung von neuem Bleichmittel geschehen, welches dann in der zweiten Bleichstufe zusätzlich zur Verfügung steht. In idealer Weise wird dieses Problem gelöst, wenn man das Rest-Bleichmittel aus der ersten Bleichstufe in das gleiche Bleichmittel umsetzt, welches in der zweiten Bleichstufe verwendet wird.

Das ist im Falle der beschriebenen Bleichanordnung durchaus möglich. Bekanntlich wird das reduktive Bleichmittel FAS der zweiten Bleichstufe durch Umsetzung von Peroxid mit Thioharnstoff hergestellt. Mit anderen Worten: Zur Erzeugung von FAS wird ein Reaktionspartner benutzt, nämlich das Peroxid, welches am Ende der ersten Bleichstufe als Rest-Peroxid anfällt. Es besteht daher die Möglichkeit, durch Zugabe des erwähnten anderen Reaktionspartners, nämlich Thioharnstoff, sowohl das Rest-Peroxid unschädlich zu machen als auch zusätzliches FAS zu erzeugen.

Die Zugabe des Thioharnstoffs sollte vor der Zugabe des FAS erfolgen, d. h. zwischen erster und zweiter Bleichstufe, um das Rest-Peroxid rechtzeitig ausreagieren zu lassen. Denkbar ist auch die Zugabe von Thioharnstoff und FAS gemeinsam vor der zweiten Bleichstufe. In diesem Fall wird es darauf ankommen, ob unter den vorherrschenden Bedingungen das Rest-Peroxid schnell genug mit dem Thioharnstoff gegenüber der Konkurrenzreaktion mit der FAS umgesetzt wird.

## Ansprüche

1. Verfahren zur Weißgraderhöhung von Altpapier, bei dem das Altpapier in wäßrige Aufschwemmung gebracht und danach sowohl einem Deinkingverfahren als auch einer Bleichbehandlung unterzogen wird, dadurch gekennzeichnet, daß

a) die wäßrige Aufschwemmung ohne akalische Chemikalien oder nur mit einem Minimum an alkalischen Chemikalien hergestellt wird,

b) die Bleichbehandlung in mindestens zwei Stufen erfolgt, wobei die Bleichchemikalien so gewählt werden, daß nach der letzten Bleichstufe ohne Zugabe weiterer pH-Wert- ändernder Stoffe, insbesondere Säuren oder Basen, im Altpapier ein Milieu von etwa pH 6,5 - 7,5 herrscht, so daß das ggfs. bei der Bleichbehandlung abzuleitende Wasser, insbesondere Wasch- oder Eindickfiltrat, ebenfalls in diesem Milieu liegt.

2. Verfahren nach Anspruch 1, dadurch gekennzeichnet, daß das Deinkingverfahren nach der Bleichbehandlung durchgeführt wird, und zwar in einem etwa neutralen chemischen Milieu.

3. Verfahren nach Anspruch 1, dadurch gekennzeichnet, daß das Deinkingverfahren in mehreren Teilen durchgeführt wird, wobei ein Teil nach der Bleichbehandlung in einem etwa neutralen chemischen Milieu erfolgt.

4. Verfahren nach Anspruch 1, dadurch gekennzeichnet, daß das Deinkingverfahren mehrstufig erfolgt, wobei die Verfahrensschritte Wäsche oder Flotation sowie Kombinationen davon angewendet werden.

5. Verfhren nach Anspruch 1, 2, 3 oder 4, dadurch gekennzeichnet, daß vor, zwischen oder nach den Verfahrensschritten zum Deinken eine mechanische Dispergierung bei Stoffdichten zwischen 10 % und 50 % und bei Temperaturen zwischen 40° und 125°C vorgenommen wird, wodurch nach der im wesentlichen neutralen Auflösung noch verbleibende Druck- und Streichfarben-Partikel von den Fasern abgelöst und störende Substanzen weitgehendzerkleinert werden.

6. Verfahren nach einem der Ansprüche 1 bis 4, dadurch gekennzeichnet, daß als Bleichmittel Formamidinsulfinsäure (FAS) eingesetzt wird.

7. Verfahren nach einem der Ansprüche 1 bis 5, dadurch gekennzeichnet, daß mit einer zweistufigen Bleiche mit oxidativen und reduktiven Bleichmitteln gearbeitet wird, wobei vorzugsweise für die erste Bleichstufe eine Hochtemperatur-Hochkonsistenz-Bleiche (Disperger-Bleiche) durchgeführt wird, während die anschließende zweite Bleichstufe als sog. Medium Consistenz-Bleiche (MC-Bleiche) mit Formamidinsulfinsäure (FAS) als Bleichmittel abläuft.

8. Verfahren nach Anspruch 6, dadurch gekennzeichnet, daß die Dispergerbleiche mit einer Stoffdichte von etwa 25 % und bei etwa 90°C mit Peroxid durchgeführt wird und die MC-Bleiche bei etwa 15% Stoffdichte und der sich bei der Verdünnung einstellenden Temperatur

9. Verfahren nach einem der Ansprüche 1 bis 7, dadurch gekennzeichnet, daß nicht nur die erste, sondern auch die zweite Bleichstufe als Hochtemperatur-Hochkonsistenz-Bleiche (Disperger-Bleiche) durchgeführt wird, vorzugsweise bei 95°C und 30 % Stoffdichte mit Formamidinsulfinsäure (FAS) als Bleichmittel.

10. Verfahren nach Anspruch 7 oder 8, dadurch gekennzeichnet, daß oxidatives überschüssiges Bleichmittel am Ende der ersten Bleichstufe durch Zusatz von anderen chemischen Verbindungen zu einem neuen reduktiven Bleichmittel umgesetzt wird, welches u.a. auch in der zweiten Bleichstufe zum Einsatz kommen kann.

11. Verfahren nach Anspruch 9, dadurch gekennzeichnet, daß das erste Bleichmittel Peroxid und die am Ende der ersten Bleichstufe hinzugesetzte chemische Verbindung Thioharnstoff enthalten, daß aus dem Thioharnstoff mit dem Restbleichmittel der ersten Bleichstufe, vorzugsweise im Bereich pH größer 7, als neues Bleichmittel Formamidinsulfinsäure (FAS) entsteht, und daß die Thioharnstoff enthaltende chemische Verbindung separat vor oder zusammen mit dem zweiten Bleichmittel, ebenfalls Formamidinsulfinsäure (FAS), zugegeben wird.

12. Verfahren nach Anspruch 10, dadurch gekennzeichnet, daß in der oxidativen Bleichstufe eine überhöhte Peroxidmenge hinzugesetzt wird, wodurch ein definierter Peroxid-Überschuß verbleibt, aus dem durch Zugabe von Thioharnstoff eine entsprechende Menge FAS erzeugt wird, und folglich in der reduktiven zweiten Bleichstufe kein oder nur eine reduzierte Menge von zusätzlichem FAS hinzugegeben werden muß.

13. Verfahren nach Anspruch 10 oder 11, dadurch gekennzeichnet, daß überschüssiger Thioharnstoff am Ende der zweiten Bleichstufe oxidativ zerstört wird, vorzugsweise mit Peroxid.

FIG.1

W1  A

W2

1

2

3

4

CH1

W3

5  6  7  8

F1  D

CH2

13  12  11  10

14  9

PM  CH3

F2

EP 0 360 993 A2

$$H_2N-\underset{\underset{S}{\|}}{C}-NH_2 \quad + \quad 2\ H-O-O-H$$

$$= \quad HO_2S-\underset{\underset{NH}{\|}}{C}-NH_2 \quad + \quad 2\ H-O-H$$

## Fig. 3

$$HO_2S-\underset{\underset{NH}{\|}}{C}-NH_2 \quad + \quad 2\ H_2O \quad + \quad NaOH$$

$$= \quad \boxed{4\,H} \quad + \quad NaHSO_4 \quad + \quad H_2N-\underset{\underset{O}{\|}}{C}-NH_2$$

## Fig. 2